# EUROPÄISCHE PATENTANMELDUNG

(11) **EP 0 731 121 A2**
(43) Veröffentlichungstag der Anmeldung: **11.09.1996**
(21) Anmeldenummer: 96103127.5
(22) Anmeldetag: 01.03.1996
(51) Int. Cl.: C08G 18/67, C08G 18/68, C09D 175/16

(54) **Aminomodifizierte Urethanacrylate**

(30) Priorität: 09.03.1995 DE 19508310; 09.03.1995 DE 19508308
(71) Anmelder: BASF AKTIENGESELLSCHAFT, 67056 Ludwigshafen (DE)
(72) Erfinder: Reich, Wolfgang, Dr., 67133 Maxdorf (DE); Beck, Erich, Dr., 68528 Ladenburg (DE); Keil, Edmund, 67259 Heuchelheim (DE); Jäger, Ulrich, Dr., 67376 Harthausen (DE); Lokai, Matthias, 67677 Enkenbach-Alsenborn (DE); Fries, Werner, Dr., 67459 Böhl-Iggelheim (DE); Ambach, Eberhard, Dr., 67125 Dannstadt-Schauernheim (DE)

(57) **Zusammenfassung**

Urethan(meth)acrylate, erhältlich durch
a) Umsetzung von Polyether- oder Polyester(meth)acrylaten, welche gegebenenfalls noch mindestens eine freie Hydroxylgruppe aufweisen, mit primären oder sekundären Aminoverbindungen, welche mindestens eine Hydroxylgruppe aufweisen, so daß 0,5 bis 60 mol-% der (Meth)acrylgruppen in Form von Michael-Addukten mit den Aminoverbindungen vorliegen und
b) anschließende Umsetzung des in a) erhaltenen Produkts mit Polyisocyanaten.

## Beschreibung

Die Erfindung betrifft Urethan(meth)acrylate, erhältlich durch Umsetzung von mindestens eine freie Hydroxygruppe aufweisenden Polyether-, Polyester(meth)acrylaten oder Epoxid(meth)acrylaten, bei denen 0,5 bis 60 mol-% der (Meth)acrylgruppen als Michael-Addukt mit primären oder sekundären Aminen vorliegen, mit Isocyanaten, und insbesondere Urethan(meth)acrylate, erhältlich durch
a) Umsetzung von Polyether-, Polyester(meth)acrylaten oder Epoxid(meth)acrylaten, welche gegebenenfalls noch mindestens eine freie Hydroxylgruppe aufweisen, mit primären oder sekundären Aminoverbindungen, welche mindestens eine Hydroxylgruppe aufweisen, so daß 0,5 bis 60 mol-% der (Meth)acrylgruppen in Form von Michael-Addukten mit den Aminoverbindungen vorliegen und
b) anschließende Umsetzung des in a) erhaltenen Produkts mit Isocyanaten.

Aus der DE-A-23 46 424 und EP-A-211 978 sind Michael-Addukte von primären oder sekundären Aminen mit Acrylaten bekannt. Die beschriebenen aminmodifizierten Acrylate finden z.B. in Überzugsmassen Verwendung und zeigen eine erhöhte Reaktivität bei der Strahlungshärtung.

In der EP-A-280 222 werden entsprechende Michael-Addukte von primären Monoaminen und Acrylaten beschrieben. Als Acrylate werden auch Umsetzungsprodukte von hydroxygruppenhaltigen (Meth)acrylsäureestern mit isocyanatgruppenhaltigen Mono- bzw. Oligomeren genannt.

Gegenstand der DE-A-4 007 146 sind sowohl Amin als auch zwingend Harnstoffgruppen enthaltende Urethan(meth)acrylate mit einem Gehalt von durch Michael-Addition gebundenen Aminogruppen. Als Ausgangskomponente für die Urethan(meth)acrylate werden Acrylate erhalten, z.B. durch Umsetzung von Acrylsäure mit ein- oder mehrwertigen Alkoholen bzw. deren alkoxylierten Derivaten, aufgeführt.

Für die Strahlungshärtung werden Urethan(meth)acrylate mit möglichst hoher Reaktivität gewünscht. Des weiteren soll die Viskosität der Urethan(meth)acrylate gering sein, damit z.B. bei der Verwendung als Beschichtungsmittel große Mengen an Reaktivverdünnern oder Lösungsmitteln zur Einstellung der Verarbeitungsviskosität vermieden werden.

Aufgabe der vorliegenden Erfindung waren daher Urethan(meth)acrylate mit einer möglichst hohen Reaktivität bei der Strahlungshärtung und gleichzeitig einer geringen Viskosität.

Demgemäß wurden die oben beschriebenen Urethan(meth)acrylate gefunden.

Gefunden wurden auch Verfahren zur Herstellung der Urethan(meth)acrylate, sowie strahlungshärtbare Massen, welche die Urethan(meth)acrylate enthalten.

Polyether - oder Polyester(meth)acrylate als Ausgangsstoffe für die Urethan(meth)acrylate sind in bekannter Weise erhältlich durch Veresterung von (Meth)acrylsäure mit Hydroxygruppen enthaltenden Polyestern oder Polyethern.

Bevorzugt sind generell Acrylate gegenüber (Meth)acrylaten. Besonders bevorzugt sind Polyetheracrylate. Die Polyester- bzw. Polyether(meth)acrylate enthalten bevorzugt 1 bis 5, insbesondere 2 bis 4(meth)acrylgruppen und 0 bis 3, insbesondere 1 bis 2 Hydroxylgruppen im Molekül.

Bei der Veresterung wird das molare Verhältnis der (Meth)acrylsäure zu den Polyestern oder Polyethern geeigneterweise so gewählt, daß keine oder die gewünschte Zahl Hydroxylgruppen im Molekül verbleibt.

Die Molekulargewichte Mₙ der Polyester bzw. Polyether liegen bevorzugt zwischen 100 und 4000 (Mₙ bestimmt durch Gelpermeationschromatographie).

Die Polyester bzw. Polyether enthalten vorzugsweise keine Doppelbindungen.

Polyester können z.B. in üblicher Weise durch Veresterung von Dicarbonsäuren oder Polycarbonsäuren mit Diolen oder Polyolen hergestellt werden. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Diole kommen vorzugsweise in Betracht Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols.

Als Polyole sind in erster Linie Trimethylolpropan, Glycerin oder Pentaerythrit zu nennen.

Als Diole oder Polyole in Betracht kommen auch oxalkylierte (z.B. mit Ethylenoxid oder Propylenoxid) Diole oder Polyole, insbesondere mit einem Oxalkylierungsgrad von 0 bis 10, bezogen auf die jeweiligen Hydroxygruppen des Diols oder Polyols bzw. einem Oxalkylierungsgrad von 1 bis 10, bezogen auf insgesamt alle Hydroxygruppen des Diols oder Polyols.

Zu den erfindungsgemäß einzusetzenden Polyesterolen zählen auch Polycaprolactondiole und -triole, deren Herstellung dem Fachmann ebenfalls bekannt ist.

Als Polyether, welche keine Estergruppen enthalten, kommen z.B. solche in Frage, welche nach bekannten Verfahren durch Umsetzung von zwei- und/oder mehrwertigen Alkoholen, z.B. den voranstehend aufgeführten Diolen oder Polyolen mit verschiedenen Mengen an Ethylenoxid und/oder Propylenoxid erhalten werden können. Desgleichen sind auch Polymerisationsprodukte des Tetrahydrofurans oder Butylenoxids verwendbar.

Bevorzugt sind Oxalkylierungsprodukte der obengenannten Diole oder Polyole, insbesondere mit einem Oxalkylierungsgrad von bevorzugt 0 bis 10, bezogen auf die jeweiligen Hydroxygruppen des Diols oder Polyols, wobei jedoch insgesamt mindestens 2, vorzugsweise mindestens 3 und besonders bevorzugt mindestens 4 Alkoxygruppen im Polyether vorhanden sind und im allgemeinen nicht mehr als 20 Alkoxygruppen vorhanden sind.

Epoxid(meth)acrylate,welche gegebenenfalls noch freie Hydroxygruppen enthalten, sind z.B. solche wie sie durch Umsetzung von epoxidierten Olefinen oder Diglycidylethern, z.B. aormatischen Polyepoxiden, wie Bisphenol-A-diglycidylether mit (Meth)acrylsäure erhältlich sind.

Besonders bevorzugt sind Polyesteracrylate und ganz besonders Polyetheracrylate.

Bei den Polyether-, Polyester(meth)acrylaten oder Epoxid(meth)acrylaten liegen 0,5 bis 60, vorzugsweise 0,5 bis 30, insbesonders bevorzugt 0,5 bis 15, insbesondere 1 bis 15 mol-% und ganz besonders bevorzugt 1 bis 10 mol-% der (Meth)acrylgruppen als Michael-Addukt mit primären oder sekundären Aminen vor.

Primäre oder sekundäre Aminogruppen addieren sich gemäß einer Michaeladdition an Acrylgruppen:

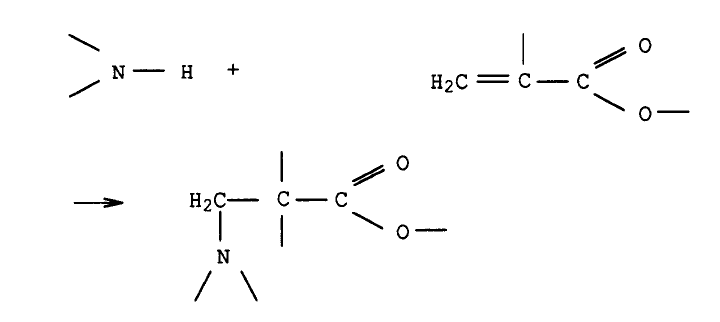

Aus primären Aminogruppen werden dabei sekundäre Aminogruppen, welche sich wiederum erneut an Acrylgruppen unter Bildung tertiärer Aminogruppen addieren können.

Geeignete Verbindungen mit primären oder sekundären Aminogruppen sind im allgemeinen niedermolekular und weisen vorzugsweise ein Molgewicht unter 1000 auf. Bevorzugte Verbindungen enthalten 1 bzw. 2 bis 6, besonders bevorzugt 2 bis 4 aminische Wasserstoffatome (N-H) von primären oder sekundären Aminen.

Zu nennen sind beispielsweise primäre Monoamine (2 aminische Wasserstoffatome) wie C₁-C₂₀-alkylamine, insbesondere n-Butylamin, n-Hexylamin, 2 Ethylhexylamin, Octadecylamin, cycloaliphatische Amine wie Cyclohexylamin sowie (hetero)aromatengruppenhaltige Amine wie Benzylamin, 1-(3-Aminopropyl-)imidazol, Tetrahydrofurfurylamin.

Verbindungen mit 2 primären Aminogruppen sind z.B. C₁-C₂₀-alkylendiamine wie Ethylendiamin, Butylendiamin etc.

Geeignet sind insbesondere auch Aminverbindungen mit mindestens 1, bevorzugt 1 bis 3, besonders bevorzugt 1 Hydroxylgruppe.

Genannt seien z.B. Alkanolamine, insbesondere C₂-C₂₀-Alkanolamine wie Ethanolamin, Propanolamin, Butanolamin.

Die Bildung der Michael-Addukte kann in einfacher Weise durch Zugabe der Aminoverbindungen zu den (Meth)acrylaten bei vorzugsweise Temperaturen von 10 bis 100°C erfolgen.

Die erfindungsgemäßen Urethan(meth)acrylate können dann durch Umsetzung der mindestens eine freie Hydroxygruppe aufweisenden Polyether-, Polyester(meth)acrylate oder Epoxid(meth)acrylate, bei denen 0,5 bis 60 mol-% der (Meth)acrylgruppen als Michael-Addukt mit primären oder sekundären Aminen vorliegen, mit Isocyanaten oder Epoxid(meth)acrylate erhalten werden. Die freie Hydroxygruppe bzw. Hydroxygruppen (bevorzugt 1 bis 6, besonders bevorzugt 1 bis 3 Hydroxygruppen können z.B. durch nichtäquimolare Umsetzung der (Meth)acrylsäure mit Polyesterolen, Polyetherolen oder den Ausgangsverbindungen der Epoxid(meth)acrylate im Molekül vorhanden sein. Eine bevorzugte Ausführungsform ist jedoch die Hydroxygruppen zumindest zum Teil oder gänzlich durch die Hydroxygrupppen enthaltende Aminogruppe in das Molekül einzuführen.

Geeignete Isocyanate sind solche mit einer mittleren Isocyanat-Funktionalität von mindestens 2,0 (d.h. mindestens zwei Isocyanatgruppen im Molekül), bevorzugt von 2,2 bis 5,0 und einem Isocyanat-Gehalt von 5 bis 30 Gew.-%, bevorzugt von 10 bis 25 Gew.-%, die vorzugsweise eine maximale Viskosität von 10000 mPas bei 25°C aufweisen. Prinzipiell geeignet sind aliphatische, cycloaliphatische und aromatische Diisocyanate, z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocyanat, 4,4'-Diisocyanatodiphenylmethan, 4,4'-Diisocyanatodicyclohexylmethan, 2,4- und 2,6-Toluylendiisocyanat, Tetramethylxylylendiisocyanat. Besonders geeignet sind auch Isocyanurate oder Biurete der voranstehend genannten Diisocyanate.

Es können z.B. auch s.g. "Lackpolyisocyanate" eingesetzt, wie sie beispielsweise in der EP-PS 0 358 979 beschrieben sind. Bei diesen Verbindungen handelt es sich z.B. um die Uretdion-, Biuret- und Isocyanurat-Gruppen aufweisenden Additionsprodukte z.B. obiger Diisocyanaten wie z.B. 1,6-Diisocyanatohexan oder Isophorondiisocyanat, die eine geringere Viskosität von beispielsweise 50 bis 500 oder 50 bis 3000 mPas bei 25°C aufweisen können. Besonders bevorzugt sind Isocyanat-Härter, die zusätzlich noch eine die Dispergierbarkeit in Wasser gewährleistende Menge eines Emulgators enthalten, wobei der Emulgator ein Umsetzungsprodukt eines Polyisocyanats mit einem ein- oder mehrwertigen, nicht-ionischen Polyether-Alkohol mit mindestens einer, mindestens 10 Ethylenoxideinheiten aufweisenden Polyetherkette sein kann.

Derartige wasseremulgierbare Polyisocyanate sind beispielsweise in der EP-ES 0 206 059 oder der DE-OS 4 036 927 beschrieben.

Die Umsetzung der Isocyanate mit den Polyether-, Polyester(meth)acrylaten oder Epoxid(meth)acrylaten a) kann vorzugsweise bei Temperaturen von 0 bis 100, besonders bevorzugt von 20 bis 80°C durchgeführt werden.

Zur Beschleunigung der Umsetzung können Katalysatoren, wie sie z.B. in Houben-Weyl, Methoden der organischen Chemie, Bd. XIV/2, S. 60f, Georg-Thieme-Verlag, Stuttgart (1963) bzw. Ullmann, Encyclopädie der technischen Chemie, Bd. 19, S. 306 (1981) beschrieben sind, eingesetzt werden. Bevorzugt sind zinnhaltige Verbindungen wie Dibutylzinndilaurat, Zinn(II)octoat oder Dibutylzinndimethoxid. Im allgemeinen werden solche Katalysatoren in einer Menge von 0,001 bis 2,5 Gew.-%, bevorzugt von 0,005 bis 1,5 Gew.-%, bezogen auf die Gesamtmenge der Reaktanden eingesetzt.

Bei der Umsetzung mit Isocyanaten wird vorzugsweise das Mengenverhältnis so gewählt, daß auf eine OCN-Gruppe 0,7 bis 1,3 OH-Gruppen entfallen. Besonders bevorzugt wird das Verhältnis der OCN zu OH-Gruppen ca. equimolar gewählt.

Die erfindungsgemäßen Urethanacrylate sind vorzugsweise im wesentlichen frei von Harnstoffgruppen.

Die nach dem erfindungsgemäßen Verfahren erhältlichen Urethan(meth)acrylate vorzugsweise Urethanacrylate sind im allgemeinen flüssig, weisen eine geringe Viskosität auf, wodurch insbesondere der Bedarf an Reaktivverdünnern zur Einstellung von zur Verarbeitung geeigneten Viskositäten vermindert wird.

Die Urethan(meth)acrylate haben auch eine sehr gute Lagerstabilität, insbesondere bei Temperaturen unter 10°C. Die gute Lagerstabilität äußert sich z.B. durch eine geringe Neigung zur Kristallisation und zur Thixotropie.

Sie eignen sich insbesondere zur Verwendung als oder in strahlungshärtbare Massen, insbesondere Überzugsmassen, welche thermisch, bevorzugt aber durch energiereiche Strahlung gehärtet werden können.

Die Massen können als bzw. in Beschichtungsmassen, z.B. Lacken, Druckfarben, oder Klebstoffen, als Druckplatten, als Formkörper, zur Herstellung von Photoresisten, in der Stereolithographie oder als Gießmasse, z.B. für optische Linsen verwendet werden.

Zur Verwendung als oder in strahlungshärtbaren Massen können Zusatzstoffe₁ z.B. Vernetzer, Verdicker, Verlaufsmittel oder Füllstoffe bzw. Pigmente etc. zingesetzt werden.

Die strahlungshärtbaren Acrylate bzw. ihre Zubereitungen können thermisch, vorzugsweise durch energiereiche Strahlung wie UV-Licht oder Elektronenstrahlen gehärtet werden.

Zur Strahlungshärtung durch UV-Licht werden üblicherweise Photoinitiatoren zugesetzt.

Als Fotoinitiatoren in Betracht kommen z.B. Benzophenon und Derivate davon, wie z.B. Alkylbenzophenone, halogenmethylierte Benzophenone, Michlers Keton, sowie Benzoin und Benzoinether wie Ethylbenzoinether, Benzilketale wie Benzildimethylketal, Acetophenonderivate wie z.B. Hydroxy-2-methyl-phenylpropan-1-on und Hydroxycyclohexyl-phenylketon, Anthrachinon und seine Derivate wie Methylanthrachinon und insbesondere Acylphosphinoxide wie z.B. Lucirin® TPO (2,4,6-Trimethylbenzoyldiphenylphosphinoxid).

Die Fotoinitiatoren, die je nach Verwendungszweck der erfindungsgemäßen Massen in Mengen zwischen 0,1 und 15 Gew.-%, vorzugsweise 1 bis 10 Gew.-%, bezogen auf die polymerisierbaren Komponenten, eingesetzt werden, können als einzelne Substanz oder, wegen häufiger vorteilhafter synergistischer Effekte, auch in Kombination miteinander verwendet werden.

### Beispiele

### Beispiel 1

700 g eines Polyetheracrylats (Laromer® LR 8748) wurden auf 70°C aufgeheizt und mit 42 g Methylethanolamin versetzt. Nach 4 Stunden Reaktionsdauer bei 70°C wurden 105,5 g eines Isocyanurats auf Basis von Hexamethylendiisocyanat und 0,17 g Dibutylzinndilaurat zugegeben. Man ließ noch weitere 5 Stunden bei 80°C nachreagieren.

Jodfarbzahl (JFZ): 2 (nach DIN 6162)
Viskosität: 3,5 Pas (bestimmt mit Kugel-Platte Viskosimeter)

### Beispiele 2 bis 6

800 g eines mit einem Hydroxylamin modifizierten Polyetheracrylats und Isocyanat wurden gemäß Tabelle 1 mit 0,16 g Dibutylzinndilaurat versetzt und auf 80°C aufgeheizt. Nach 5 Stunden Reaktion bei dieser Temperatur wurde das Produkt filtriert.

**Tabelle 1**

| Isocyanat | | Produkt | |
|---|---|---|---|
| Art | Menge | JFZ | Viskosität (Pas) |
| IPDI¹ | 55,5 | 3 | 10,7 |
| IPDI | 27,8 | 2 | 2,4 |
| TDI² | 42,0 | 1 | 9,4 |
| TDI | 21,0 | 1 | 2,3 |
| Isocyanurat³ | 47,2 | 1 | 7,0 |

| | | | |
|---|---|---|---|
| ¹ Isophorondiisocyanat | | | |
| ² Toluylendiisocyanat | | | |
| ³ Isocyanurat des Hexamethylendiisocyanats | | | |

### Beispiele 7 bis 12

750 g eines aminmodifizierten (kein OH-Amin) Polyetheracrylat (Laromer® LR 8889) und Isocyanat wurden gemäß Tabelle 1 mit 0,16 g Dibutylzinndilaurat versetzt und auf 80°C aufgeheizt. Nach 5 Stunden Reaktion bei dieser Temperatur wurde das Produkt filtriert.

**Tabelle 2**

| Isocyanat | | Produkt | |
|---|---|---|---|
| Art | Menge (g) | IFZ | Visk. (Pas) |
| IPDI ¹⁾ | 55,5 | 10 | 0,41 |
| IPDI | 27,8 | 5 | 0,22 |
| TDI ²⁾ | 42,0 | 3 | 0,47 |
| TDI | 21,0 | 2 | 0,22 |
| Isocyanurat ³⁾ | 94,3 | 4 | 1,11 |
| Isocyanurat | 47,2 | 3 | 0,34 |

| | | | |
|---|---|---|---|
| ¹⁾ Isophorondiisocyanat | | | |
| ²⁾ Toluylendiisocyanat | | | |
| ³⁾ Isocyanurat des Hexamethylendiisocyanats | | | |

## Patentansprüche

1. Urethan(meth)acrylate, erhältlich durch Umsetzung von mindestens eine freie Hydroxygruppe aufweisenden Polyether-, Polyester(meth)acrylaten oder Epoxid(meth)acrylaten, bei denen 0,5 bis 60 mol-% der (Meth)acrylgruppen als Michael-Addukt mit primären oder sekundären Aminen vorliegen, mit Isocyanaten.

2. Urethan(meth)acrylate gemäß Anspruch 1, erhältlich durch
a) Umsetzung von Polyether-, Polyester(meth)acrylaten oder Epoxid(meth)acrylaten, welche gegebenenfalls noch mindestens eine freie Hydroxylgruppe aufweisen, mit primären oder sekundären Aminoverbindungen, welche mindestens eine Hydroxylgruppe aufweisen, so daß 0,5 bis 60 mol-% der (Meth)acrylgruppen in Form von Michael-Addukten mit den Aminoverbindungen vorliegen und
b) anschließende Umsetzung des in a) erhaltenen Produkts mit Isocyanaten.

3. Urethan(meth)acrylate gemäß Anspruch 1 oder 2, wobei Polyetheracrylate eingesetzt werden.

4. Urethan(meth)acrylate gemäß einem der Ansprüche 1 bis 3, wobei die Polyether- oder Polyester(meth)acrylate oder Epoxid(meth)- acrylate 1 bis 5 (Meth)acrylgruppen im Molekül aufweisen.

5. Urethan(meth)acrylate gemäß einem der Ansprüche 1 bis 4, wobei 0,5 bis 30 mol-% der (Meth)acrylgruppen durch Zugabe von Aminoverbindungen mit 2 bis 6 aminischen Wasserstoffatomen (N-H) und einer Hydroxylgruppe in das Michael-Addukt überführt sind.

6. Urethan(meth)acrylate gemäß einem der Ansprüche 1 bis 4, wobei die Isocyanate 2 bis 5 Isocyanatgruppen im Molekül aufweisen.

7. Verfahren zur Herstellung von Urethan(meth)acrylaten gemäß Anspruch 1, dadurch gekennzeichnet, daß mindestens eine freie Hydroxygruppe aufweisende Polyether-, Polyester(meth)acrylate oder Epoxid(meth)acrylate, bei denen 0,5 bis 30 mol-% der (Meth)acrylgruppen als Michael-Addukt mit primären oder sekundären Aminen vorliegen, mit Isocyanaten umgesetzt werden.

8. Verfahren zur Herstellung der Urethan(meth)acrylate gemäß Anspruch 2, dadurch gekennzeichnet, daß die Verfahrensschritte a) und b) durchgeführt werden.

9. Verfahren gemäß Anspruch 7 oder 8, dadurch gekennzeichnet, daß die Isocyanate in ungefähr äquimolaren Mengen der Isocyanatgruppen zu den Hydroxylgruppen eingesetzt werden.

10. Strahlungshärtbare Massen, enthaltend Urethan(meth)acrylate gemäß einem der Ansprüche 1 bis 9.

11. Verwendung der Urethan(meth)acrylate gemäß einem der Ansprüche 1 bis 6 oder der strahlungshärtbaren Massen gemäß Anspruch 10 als Beschichtungsmittel.
